# EUROPEAN PATENT SPECIFICATION

(11) **EP 1 974 988 B1**
(45) Date of publication and mention of the grant of the patent: **22.08.2012**
(21) Application number: 08102686.6
(22) Date of filing: 17.03.2008
(51) Int. Cl.: B60N 2/28

(54) **Device for mounting a child seat in a car and a child seat**
Vorrichtung zum Anbringen eines Kindersitzes in einem Auto und Kindersitz
Dispositif de montage d'un siège enfant dans une voiture, et siège enfant

(30) Priority: 15.03.2007 EP 07104250
(43) Date of publication of application: 01.10.2008
(73) Proprietor: Team-Tex, 38230 Charvieu (FR)
(72) Inventor: van der Vegt, Herman, 3512 LL Utrecht (NL)
(74) Representative: Uittenbogaart, Gustaaf Adolf

(56) References cited:
- EP-A- 1 344 679
- US-A1- 2004 178 669
- US-B1- 6 793 283

## Description

The invention concerns a device in accordance with the preamble of claim 1. Such a device is known from EP 1344679. The disadvantage of the known device is that the child seat cannot rotate when it is placed on the device so that the child must be placed on the child seat when this is in a position whereby the child is not facing the door of the car. This makes placing the child in the seat more complicated.

In order to overcome this disadvantage the device is in accordance with claim 1. In this way the child seat placed on the upper surface can rotate, thereby making it possible to turn the seat towards the side of the car for placing a child on the seat and after that rotating the child seat so that the child faces the front of the car. For taking the child out of the car the child seat can rotate back so that removing the child from the car is easy.

In accordance with an embodiment of the invention the device is according to claim 2. In this way the mass of the child is as near as possible to the brackets in the car, so that in case of a collision the rotation of the child seat relative to the brackets is more limited so that the displacement of the child is as small as possible.

In accordance with an embodiment of the invention the device is according to claim 3. By moving the movable hooks for connecting the child seat to the device with a mechanism the operator actively connects the child seat to the device.

In accordance with an embodiment of the invention the device is according to claim 4. In this way during use the child seat is rotatable around the movable hooks. The child seat prevents in this way that clothing or hands can touch the movable hooks and interfere with their functioning.

In accordance with an embodiment of the invention the device is according to claim 5. In this way the hooks can exert forces on the child seat in all directions, so that longitudinal forces and sideway forces on the child seat can be transferred towards the car, so that the child seat is held against forces that result from longitudinal or sideways directed collisions.

In accordance with an embodiment of the invention the device is according to claim 6. In this way the child seat is centred more easily on the upper surface.

In accordance with an embodiment of the invention the device is according to claim 7. In this way the hooks can be wider so that they grip a larger arc length of the flange and fewer hooks are required for proper gripping the child seat. This improves the ease of operation of the device.

In accordance with an embodiment of the invention the device is according to claim 8. In this way there is when the movable hooks are in the second position a strong coupling between the child seat and the device.

In accordance with an embodiment of the invention the device is according to claim 9. This ensures that the movable hooks are always in a determined position and that in the second position the hooks are positioned in a stable way without the risk that the movable hooks inadvertently loosen the child seat.

In accordance with an embodiment of the invention the device is according to claim 10. In this way the moving of all the movable hooks towards the second position takes place in a single movement of the cam disc, which improves ease of use.

In accordance with an embodiment of the invention the device is according to claim 11. In this way the cam disc is locked in a simple way in the second position.

In accordance with an embodiment of the invention the device is according to claim 12. In this way the handle can be located on the slide away from the movable hooks so that it can be used in all situations, also when the child seat is positioned on the device.

In accordance with an embodiment of the invention the device is according to claim 13. This ensures that the slide can only be moved when the device is mounted in the car and the child seat is on the slide. This improves the safe use of the device as in this way the child seat is always placed on the device with the slide in the mounting position and away from the back of the seat. This is safer as in that position of the slide the child seat can be positioned and gripped by the movable hooks in a proper way so preventing errors in fastening the child seat.

In accordance with an embodiment of the invention the device is according to claim 14. This is a compact and simple way to block the movement of the slide.

In accordance with an embodiment of the invention the device is according to claim 15. In this way the movement of the slide is blocked when the attachment devices are not connected to the car mounted brackets.

In accordance with an embodiment of the invention the device is according to claim 16. In this way the slide is easily movable to its position of use and can only be moved away when determined action is taken.

In accordance with an embodiment of the invention the device is according to claim 17. In this way the movement of the slide is blocked when there is no child seat on the device.

In accordance with an embodiment of the invention the device is according to claim 18. This makes sure that when the device is removed from the car the slide is in the mounting position and thereby in the proper position for future use.

The invention also concerns a child seat for use with the device. The child seat according to claim 19 has the advantage that it can rotate when placed on the device. The child seat according to claim 20 prevents that the user can interfere with the movable hooks.

The invention will now be elucidated with the help of a description of one or more embodiments using a drawing. In the drawing
Figure 1 shows a perspective view of a child seat placed on a back seat of a car with the child seat facing sideways,
Figure 2 shows a perspective view of the child seat of figure 1 with the child seat facing forward,
Figure 3 shows a perspective view of a base for placing the child seat of figure 1 on the back seat of the car and coupling the child seat to the car,
Figure 4 shows a top view of the base of figure 3,
Figure 5 shows a longitudinal section of the base of figures 3 and 4,
Figure 6 shows a schematic top view of the base which shows movable hooks for coupling the child seat on the base in the position that the child seat can be placed over the movable hooks and parts for moving these hooks,
Figure 7 shows a schematic top view of the base similar to the view in figure 6 whereby the movable hooks are in the position that the child seat is coupled to the base,
Figure 8 shows a perspective view of parts that prevent forward movement of a slide of the base in their blocking position,
Figure 9 shows a perspective view of the parts that prevent forward movement of a slide of the base in their unblocked position,
Figure 10 shows a perspective view of parts for reinforcing the base,
Figure 11 shows a side view of an attachment device ready for connecting the base to the car mounted anchorage, and
Figure 12 shows the side view of figure 11 whereby the attachment device is connected to the car mounted anchorage.

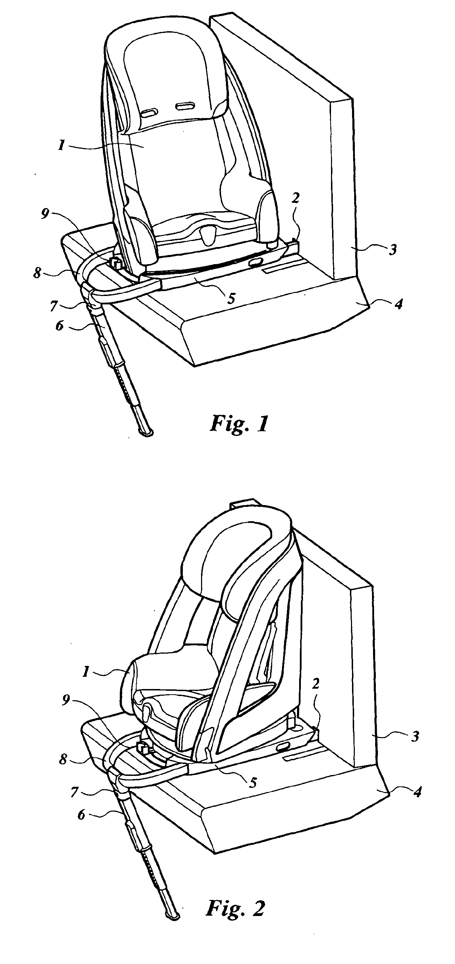

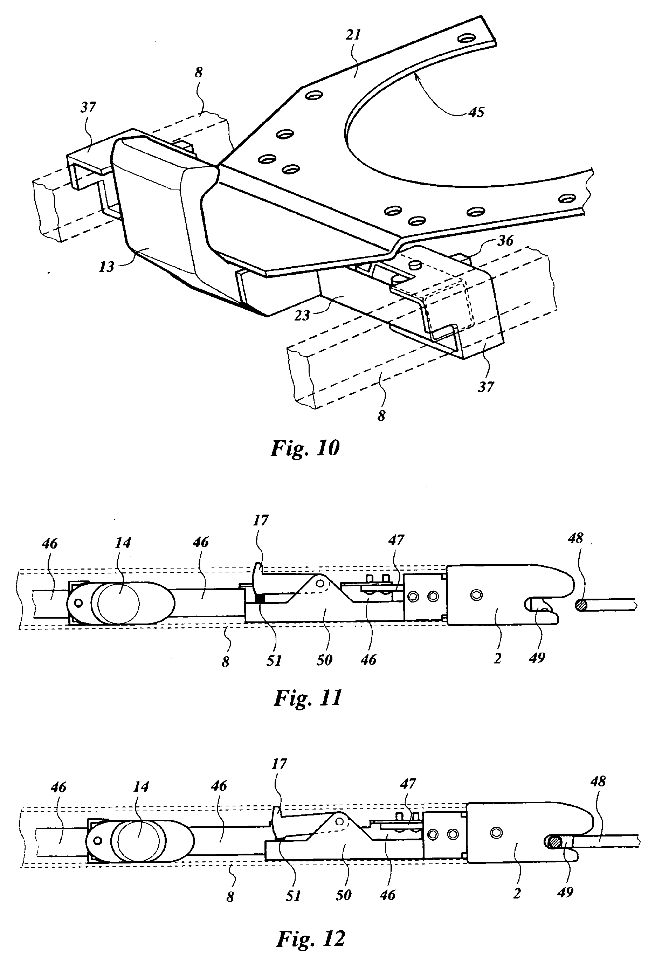

Figure 1 and figure 2 show a child seat 1 mounted in a car on a seat 4, which seat 4 has a seat back 3. For mounting the child seat 1 in the car the child seat 1 is coupled to a slide 5 that is connected with a frame 8 and that can slide along the frame 8. The frame 8, which is U - shaped, is connected with attachment devices 2 to car mounted anchorages 48 (see figures 11 and 12) accessible through a slit between the seat 4 and the seat back 3 and which are connected to the car. The front side of the frame 8 is held with a leg 6 at an adjustable distance from the floor of the car. For ease of use the leg 6 is connected with a hinge 7 to the frame 8 so that it can be folded against the frame 8. The slide 5 narrowly encompasses the frame 8 and has a height that is more or less similar to the height of the frame 8.

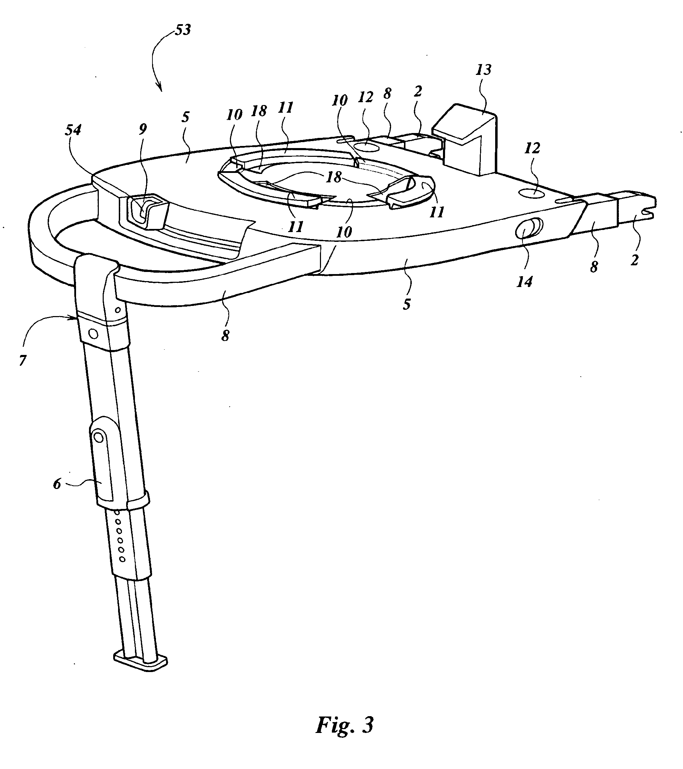

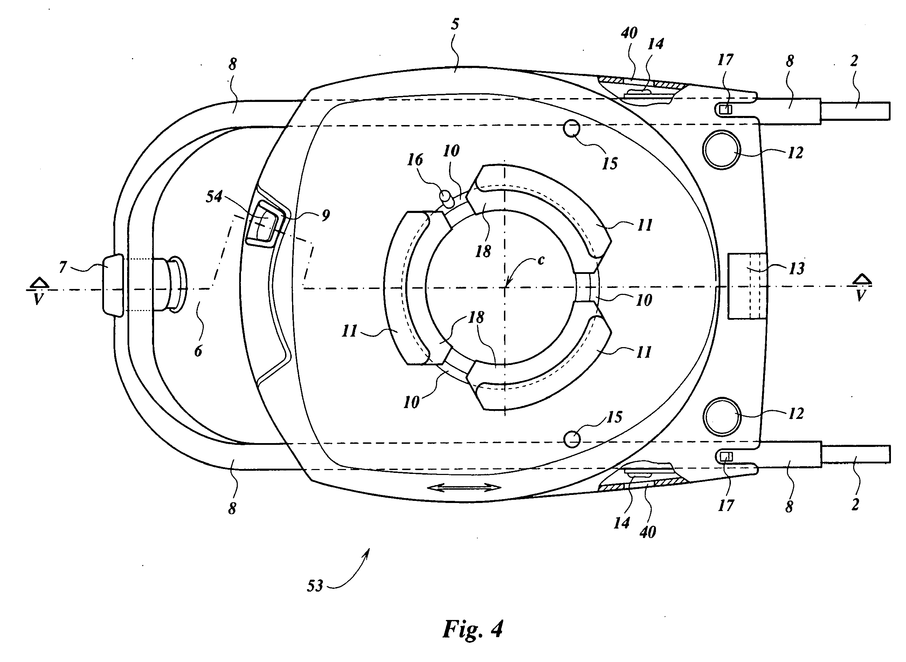

The slide 5 and the frame 8 together form a base 53 (see figure 3 and 4) that couples the child seat 1 to the car in such a way that a child in the child seat 1 is safely held in case of collision of the car. In case of collision the child seat 1 will be held against forward movement and for this the attachment devices 2 will exert a heavy load on the car and the frame 8 will be held against rotation around the car mounted anchorages 48 by the leg 6. This leg 6 can be as stiff as possible, in other embodiments the leg 6 can deform whereby energy is absorbed. For energy absorption the leg 6 can be made from parts that can slide in each other during deformation of special parts, which are for instance made of deformable metal (not shown).

For ease of use the child seat 1 is rotatable on the slide 5, so that the child can be placed in the child seat 1 when the child seat 1 is rotated towards the door of the car as shown in figure 1. After fastening the child in the child seat 1 with in the known way with a five point harness or straps (not shown), the child seat 1 is rotated so that the child faces forward and after that the child seat 1 is locked in this position. For unlocking the child seat 1 so that it can be rotated towards the door a push button 54 (see figures 3 and 4) on a control handle 9 is pushed, where after the child seat 1 can be rotated. The control handle 9 can be moved sideways for freeing the child seat 1 from the slide 5, so that it can be taken off.

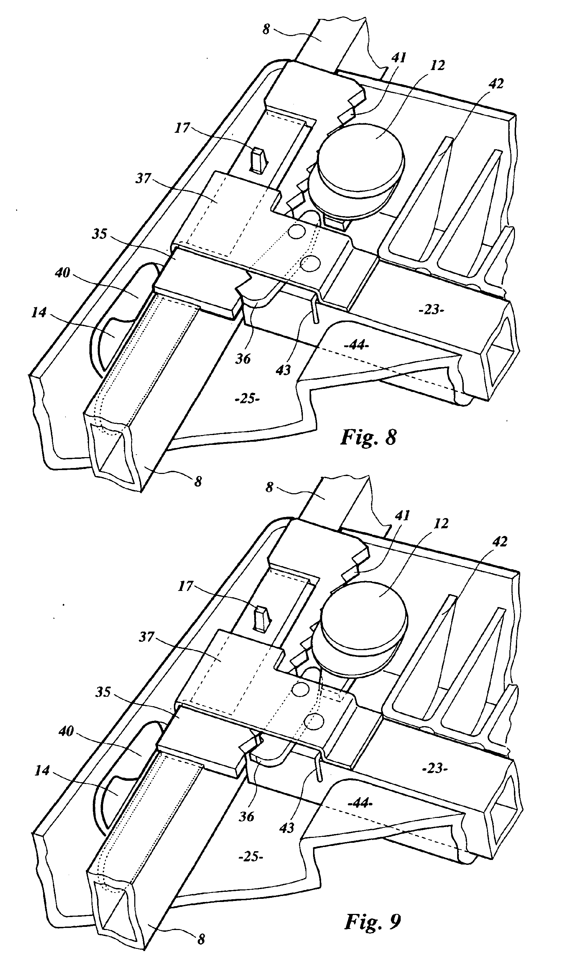

Figure 3 and figure 4 show the base 53 in the position as it is mounted in the car. The legs of the U - shaped frame 8 end in attachment devices 2, which are connectable to the car. As long as the attachment devices 2 are not connected to the car mounted anchorages 48 slide blocking pins 17 prevent sliding the slide 5 backwards in the direction of the attachment devices 2 and the seat back 3 (see figures 1 and 2). In the top surface of the slide 5 there are seat detection knobs 15 which detect whether a child seat 1 is placed on the slide 5. Also as long as these seat detection knobs 15 are not activated the backwards sliding of the slide 5 is prevented, for instance by blocking catches 36, see figures 8 and 9. In a different embodiment, the slide blocking pins 17 do not work directly on the slide 5, but extend sideways from the frame 8 and also block the catches 36.

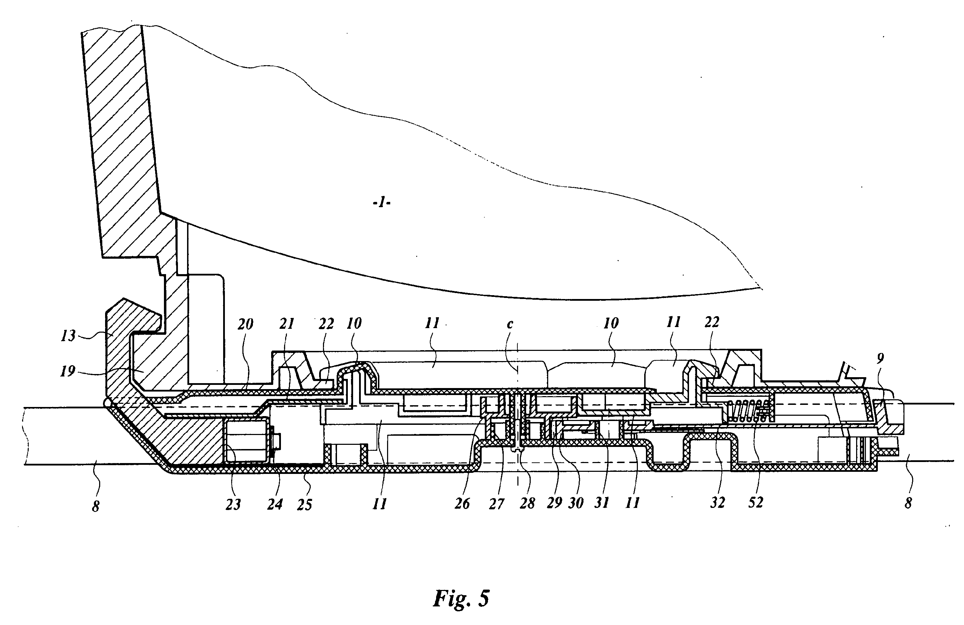

The child seat 1 is placed around three coupling hooks 11 that are slidable in the plane of the base 53 to and from a rotation axis c of the child seat 1 with the coupling handle 9. In the figures 3 and 4 the coupling hooks 11 are shown in the situation whereby the coupling hooks 11 grip the child seat 1 and the coupling hooks 11 are at their largest diameter. On the inside of the couplings hooks 11 there are openings 18 in which the couplings hooks 11 move towards a smaller diameter when moved by the coupling handle 9 to a position whereby the child seat 1 can be placed on the base 53. For guiding the child seat 1 to the position whereby the child seat 1 encloses the coupling hooks 11 there are guide notches 10 between the coupling hooks 11. The slide 5 has a safety hook 13 which grips a seat ridge 19 (see figure 5) of the child seat 1 when the child seat 1 is facing forward also to prevent tilting of the child seat 1 in a collision.

After the child seat 1 is placed on the slide 5 and the child is placed in the child seat 1, it can be rotated so that the child faces forward. A seat rotation lock 16 locks the rotation of the child seat 1 in that position. The child seat 1 can be rotated after the push button 54 in the coupling handle 9 has been pushed; this pushing moves the seat rotation lock 16 sideways so that the child seat 1 is free to rotate around the rotation axis c. In stead of the separate push button 54 the coupling handle 9 can be designed such that pushing the coupling handle 9 in radial direction or upwards or downwards has the same effect as activating the push button 54.

After the child seat 1 is placed on the slide 5, which is connected to the car mounted anchorage 48 and the seat detection knobs 15 are activated the slide 5 can be moved towards the seat back 3 so that the distance between the child seat 1 and the parts of the car in front of the child seat 1 are as large as possible. The slide 5 has openings 40 in the side of the slide 5. These openings 40 move backwards when the slide 5 moves backwards. When the slide 5 is in the forward position attachment device unlock buttons 14 can be reached through the openings 40. After the slide 5 is moved backwards it is not possible anymore to reach the attachment device unlock buttons 14, so that accidentally unlocking the attachment devices 2 is not possible. Unlocking the attachment devices 2 is only possible after the slide 5 has been moved forward which is only possible after on both sides of the slide 5 a rattle forward release button 12 has been pushed.

Figures 5 - 10 show the various parts in the slide 5. The legs of the U-shaped frame 8 are connected by a reinforcement bar 23 which can slide in longitudinal direction along the legs of frame 8. The ends of the reinforcement bar 23 have brackets 37 that enclose the legs of frame 8. The slide 5 has a bottom housing 25 and an upper housing 20 which are coupled with screws 28. The reinforcement bar 23 is positioned in the bottom housing 25 between ridges 44 and ridges 42. A reinforcement plate 21 is welded to the top of the reinforcement bar 23. The reinforcement plate 21 positions the safety hook 13 and has an inside circumference 45 that supports the coupling hooks 11 on back seat 3 side of the slide 5.

Figure 5 shows a longitudinal section of the slide 5 with the frame 8, whereby the child seat 1 is placed with a seat flange 22 around the coupling hooks 11 and the guide notches 10 and is supported by the top side of the upper housing 20.

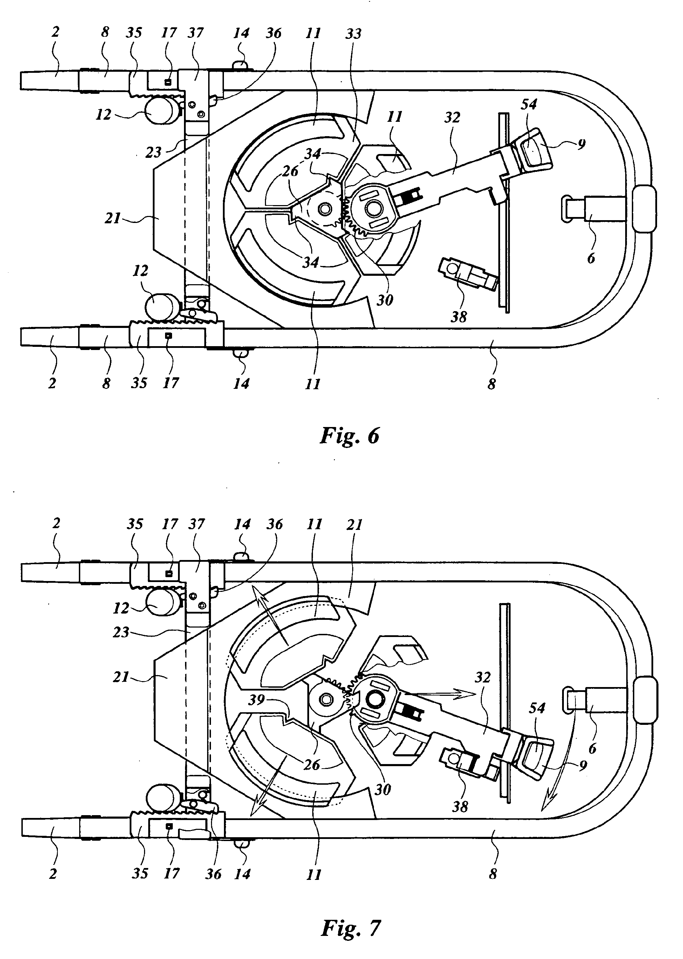

Figures 6 and 7 show the mechanism for moving the coupling hooks 11. The coupling hooks 11 have at their sides a linear guide 33 which linear guides 33 cooperate with notches in the bottom housing 25 (not shown) to guide the coupling hook 11 relative to the bottom housing 25 in radial direction to and from the rotation axis c. A cam disc 26 is rotatable around a cam disc bearing 27. The cam disc 26 has notches 34 that can rest in a slot 39 and the cam disc 26 has cams that slide along a side of a coupling hook 11 and by rotating the cam disc 26 the coupling hooks 11 are pushed outwards against the pressure of a spring 52. When pushed outwards the cam disc 26 rests with a flat surface against a flat surface of the coupling hook 11 so that by the shape of the cam disc 26 inadvertent rotation of the cam disc 26 is prevented. In figure 5 the spring 52 is located between a coupling hook 11 and the upper housing 20. The spring 52 can also be located between the coupling hook 11 and the bottom housing 25 or between two coupling hooks 11.

The cam disc 26 is rotated by rotating a handle 32 with the coupling handle 9 around a handle bearing 31. The handle 32 has a gear segment 30 with gear teeth 29 that engage with gear teeth on the cam disc 26. The radius of the gear teeth 30 on the handle 32 is larger than the radius of the gear teeth on the cam disc 26 so that the angle over which the handle 32 must be moved is smaller than the angle over which the cam disc 26 must rotate, which makes positioning and use of the coupling handle 9 easier. The handle 32 can additionally be locked in the position whereby the child seat 1 is fixed to the slide 5 with lock 38.

Figures 8 and 9 show how the forward movement of the slide 5 is locked and made possible. On the frame 8 near the reinforcement bar 23 a notched plate 35 is mounted, which notched plate 35 has notches 41 in which a lock 38 is pressed by a spring 43. The notches 41 are so that the lock 38 only allows movement of the slide 5 in the direction of the attachment devices 2, as shown in figure 8. By pushing the release buttons 12 downwards, as shown in figure 9, the lock 39 is pushed from the notches 41 and the slide 5 can move forward.

In the shown embodiment, three coupling hooks 11 can slide in radial direction. In other embodiments there can be two, four, or more coupling hooks of which one hook can be fixed. Also in stead of sliding the movable coupling hooks can pivot around a pin in order to grip around the seat flange 22.

Figures 11 and 12 show the coupling of the frame 8 to the car mounted anchorage 48. Figure 11 shows the situation where the attachment device 2 is ready to be connected to the car mounted anchorage 48. In the attachment device 2 a toggle 49 is visible. Within the frame 8 a support 50 is coupled to the attachment device 2 by an actuator 47. The actuator 47 is connected to the slide blocking pin 17, which is pushed upwards through an opening in the frame by a spring 51. The actuator 47 is further coupled to a signal rod 46, which can be actuated by the attachment device unlock button 14. This attachment device unlock button 14 can be approached through an opening in the frame 8 and the opening 40 in the side of the slide 5. The actuator 47 further actuates via the signal rod 46 a signal (not shown) near the front of the frame 8, which signal indicates whether the car mounted anchorage 48 is connected to the attachment device 2.

When the attachment device 2 is moved around the car mounted anchorage 48 the toggle 49 rotates and locks the car mounted anchorage 48 in the attachment device 2, see figure 12. The rotating toggle 49 thereby moves the actuator 47 backwards in the direction of the attachment device 2 and the slide blocking pin 17 moves downwards so that it does not extend out of the frame 8. The signal rod 46 moves backwards as well, so that at the front of the base 53 becomes visible indicating that the attachment device 2 is connected to the car mounted anchorage 48. The toggle 49 is released to rotate and release the car mounted anchorage 48 by pressing the attachment device unlock button 14.

In the disclosed embodiment there are three coupling hooks 11 that are moved by cam disc 26, slide in radial direction and so couple the child seat 1 to the base 53. It will be clear that for coupling the child seat 1 to the base 53 a different number of hooks can be used, and that instead that the hooks slide inward and outward it is also possible to use hooks that tilt inwards/outwards. In the disclosed embodiment the mechanism for moving the hooks is more or less complete between the legs of the frame 8 and under the top level of the slide 5. A design whereby the mechanism for moving the hooks is inside the circumference of the movable hooks and extends there above the top level of the slide 5 to within and partly above the seat flange 22 is also possible.

## Claims

1. Device for mounting a child seat (1) in a car comprising a frame (8) with two frame tubes having at their ends attachment devices (2) for connecting the frame to car mounted brackets (48) and a slide (5) movable along the frame tubes, the slide having a support surface (20) for supporting the child seat and two or more hooks (11) of which at least one is movable for coupling the child seat on the slide **characterized in that** the support surface (20) can support a first circular flange (22) of the child seat (1) and the hooks (11) are placed in a circle for gripping the first circular flange while leaving the child seat free to rotate when gripped by the hooks.

2. Device in accordance with claim 1 whereby the support surface (20) is parallel to the frame tubes (8) and preferably immediately above their upper surface.

3. Device in accordance with claim 1 or 2 whereby the movable hooks (11) have a first position whereby the child seat (1) can be positioned on or removed from the support surface (20) and a second position whereby the hooks can hold the first circular flange (22) against the support surface, and a mechanism (9,26,32) for positioning the movable hooks in the first position and the second position.

4. Device in accordance with claim 1, 2 or 3 whereby the hooks (11) can grip the first circular flange with their outside circumference.

5. Device in accordance with claim 1-4 whereby there are three or more hooks (11).

6. Device in accordance with claim 5 whereby the movable hooks (11) can move in three or more radial directions.

7. Device in accordance with one of the previous claims whereby the movable hooks (11) can slide along a linear guide (33) between the first position and the second position.

8. Device in accordance with one of the previous claims whereby the slide (5) has at the locations of the hooks (11) one or more second flange parts (21) so that in the second position the hooks grip both the first circular flange (22) and a second flange part.

9. Device in accordance with one of the previous claims whereby the movable hooks (11) have spring means (52) for moving it to the first position and holding means (26,34,39) for holding it in the second position.

10. Device in accordance with one of the previous claims whereby a cam disc (26) rotatable around a first axis (27) and preferably placed in the centre (c) of the hooks (11) can move the movable hooks, the cam disc having cam surfaces, each of which presses against a side plane of the movable hook.

11. Device in accordance with claim 10 whereby the cam surfaces are shaped such that the spring means (52) prevent rotation of the cam disc (26) when the movable hooks (11) are in the second position.

12. Device in accordance with claim 10 or 11 whereby the cam disc (26) is rotated by a handle (32) rotatable around a second axis and provided with means (29,30) for coupling the rotation of the cam disc and the handle.

13. Device in accordance with one of the previous claims whereby the slide (5) has a mounting position whereby it is located away from the attachment devices (2) and is provided with blocking means (17) for preventing the slide to move from the mounting position towards the attachment devices.

14. Device in accordance with claim 13 whereby the blocking means comprise pins (17) that can extend from each frame tube (8).

15. Device in accordance with claim 14 whereby each pin (17) is connected to a first sensor (49) determining whether the attachment device (2) is connected to the car mounted anchorage (48).

16. Device in accordance with claim 13, 14 or 15 whereby the frame tubes (8) are provided with notches (41) and the slide (5) with a catch (36) for preventing the slide to move in the direction away from the attachment devices (2).

17. Device in accordance with claim 16 whereby the catch (36) is connected to a second sensor (15) for determining whether a child seat (1) is placed on the support surface (20) and/or the circular flange (22) is fully positioned on the support surface.

18. Device in accordance with one of the claims 13-17 whereby the frame tubes (8) each have a button (14) for disconnecting the attachment device (2) from the car mounted bracket (48), which button is covered and/or deactivated by the slide (5) when the slide is not in the mounting position.

19. Child seat comprising a device (53) in accordance with one of the previous claims whereby the child seat (1) has a circular flange (22) that can rest on the support surface (20) and that can be gripped by the hooks (11).

20. Child seat in accordance with claim 19 whereby the circular flange (22) has on its inner diameter a cylindrical surface that can rotate around the hooks (11).

## Patentansprüche

1. Vorrichtung zum Montieren eines Kindersitzes (1) in einem Fahrzeug, aufweisend einen Rahmen (8) mit zwei Rahmenrohren, die an ihren Enden Befestigungsvorrichtungen (2) zum Anschließen des Rahmens an Fahrzeugmontagehalterungen (48) aufweisen, und mit einem Gleitstück (5), das entlang den Rahmenrohren bewegbar ist, wobei das Gleitstück eine Stützfläche (20) zum Abstützen des Kindersitzes und zwei oder mehr Haken (11) aufweist, von denen mindestens einer zum Anschließen des Kindersitzes an das Gleitstück bewegbar ist, **dadurch gekennzeichnet, dass** die Stützfläche (20) in der Lage ist, einen ersten kreisförmigen Flansch (22) des Kindersitzes (1) abzustützen, und dass die Haken (11) in einem Kreis angeordnet sind, um den ersten kreisförmigen Flansch zu greifen, wobei der Kindersitz frei drehbar ist, wenn er durch die Haken gehalten wird.

2. Vorrichtung gemäß Anspruch 1, wobei die Stützfläche (20) parallel zu den Rahmenrohren (8) und vorzugsweise unmittelbar über ihrer oberen Fläche positioniert ist.

3. Vorrichtung gemäß Anspruch 1 oder 2, wobei die bewegbaren Haken (11) aufweisen: eine erste Position, in der der Kindersitz (1) an der Stützfläche (20) positionierbar oder von dieser lösbar ist, und eine zweite Position, in der die Haken den ersten kreisförmigen Flansch (22) gegen die Stützfläche halten können, und einen Mechanismus (9, 26, 32) zum Positionieren der bewegbaren Haken in der ersten Position und der zweiten Position.

4. Vorrichtung gemäß Anspruch 1, 2 oder 3, wobei die Haken (11) den ersten kreisförmigen Flansch mit ihrem Außenumfang greifen können.

5. Vorrichtung gemäß Anspruch 1 bis 4, wobei drei oder mehr Haken (11) vorgesehen sind.

6. Vorrichtung gemäß Anspruch 5, wobei sich die bewegbaren Haken (11) in drei oder mehr radialen Richtungen bewegen können.

7. Vorrichtung gemäß einem der vorhergehenden Ansprüche, wobei die bewegbaren Haken (11) entlang einer linearen Führung (33) zwischen der ersten Position und der zweiten Position gleiten können.

8. Vorrichtung gemäß einem der vorhergehenden Ansprüche, wobei das Gleitstück (5) an den Positionen der Haken (11) einen oder mehr zweite Flanschteile (21) aufweist, so dass die Haken in der zweiten Position sowohl den ersten kreisförmigen Flansch (22) als auch den zweiten Flanschteil greifen.

9. Vorrichtung gemäß einem der vorhergehenden Ansprüche, wobei die bewegbaren Haken (11) aufweisen: Federmittel (52), um sie in die erste Position zu bewegen, und Haltemittel (26, 34, 39), um sie in der zweiten Position zu halten.

10. Vorrichtung gemäß einem der vorhergehenden Ansprüche, wobei eine um eine erste Achse (27) drehbare und vorzugsweise in der Mitte (c) der Haken (11) platzierte Kurvenscheibe die bewegbaren Haken bewegen kann, wobei die Kurvenscheibe Kurvenflächen aufweist, von denen jede gegen eine Seitenfläche des bewegbaren Hakens drückt.

11. Vorrichtung gemäß Anspruch 10, wobei die Kurvenflächen derart geformt sind, dass die Federmittel (52) ein Drehen der Kurvenscheibe (26) verhindern, wenn die bewegbaren Haken (11) in der zweiten Position sind.

12. Vorrichtung gemäß Anspruch 10 oder 11, wobei die Kurvenscheibe (26) von einem Griff (32) gedreht wird, der um eine zweite Achse drehbar ist und mit Mitteln (29, 30) zum Verbinden der Drehung der Kurvenscheibe und des Griffs versehen ist.

13. Vorrichtung gemäß einem der vorhergehenden Ansprüche, wobei das Gleitstück (5) eine Montageposition aufweist, in der es von den Befestigungsvorrichtungen (2) entfernt angeordnet ist und mit Blockiermitteln (17) versehen ist, um zu verhindern, dass sich das Gleitstück von der Montageposition zu den Befestigungsvorrichtungen bewegt.

14. Vorrichtung gemäß Anspruch 13, wobei die Blockiermittel Stifte (17) aufweisen, die sich von jedem Rahmenrohr (8) aus erstrecken können.

15. Vorrichtung gemäß Anspruch 14, wobei jeder Stift (17) mit einem ersten Sensor (49) verbunden ist, der ermittelt, ob die Befestigungsvorrichtung (2) mit der Fahrzeugmontageverankerung (48) verbunden ist.

16. Vorrichtung gemäß Anspruch 13, 14 oder 15, wobei die Rahmenrohre (8) mit Nuten (41) versehen sind und das Gleitstück (5) mit einer Arretierungsvorrichtung (36) versehen ist, um zu verhindern, dass sich das Gleitstück in der Richtung weg von den Befestigungsvorrichtungen (2) bewegt.

17. Vorrichtung gemäß Anspruch 16, wobei die Arretierungsvorrichtung (36) mit einem zweiten Sensor (15) verbunden ist, um zu ermitteln, ob ein Kindersitz (1) an der Stützfläche (20) montiert ist, und/oder der kreisförmige Flansch (22) vollständig an der Stützfläche positioniert ist.

18. Vorrichtung gemäß einem der Ansprüche 13 bis 17, wobei die Rahmenrohre (8) jeweils einen Knopf (14) zum Lösen der Befestigungsvorrichtung (2) von der Fahrzeugmontagehalterung (48) aufweisen, wobei der Knopf durch das Gleitstück (5) bedeckt und/oder deaktiviert ist, wenn sich das Gleitstück nicht in der Montageposition befindet.

19. kindersitz, aufweisend eine Vorrichtung (53) gemäß einem der vorhergehenden Ansprüche, wobei der Kindersitz (1) einen kreisförmigen Flansch (22) aufweist, der auf der Stützfläche (20) aufliegen kann und durch die Haken (11) ergreifbar ist.

20. Kindersitz gemäß Anspruch 19, wobei der kreisförmige Flansch (22) an seinem Innenumfang eine zylinderförmige Fläche aufweist, die sich um die Haken (11) herum drehen kann.

## Revendications

1. Dispositif pour monter un siège-auto pour enfant (1) dans un véhicule comprenant un cadre (8) avec deux tubes de cadre ayant à leurs extrémités des dispositifs de fixation (2) pour raccorder le cadre à des supports montés dans le véhicule (48) et une glissière (5) pouvant se déplacer le long des tubes de cadre, la glissière ayant une surface de support (20) pour supporter le siège-auto pour enfant et deux crochets (11) ou plus dont au moins un est mobile afin de coupler le siège-auto pour enfant sur la glissière, **caractérisé en ce que** la surface de support (20) peut supporter un premier rebord circulaire (22) du siège-auto pour enfant (1) et les crochets (11) sont placés sur un cercle pour saisir le premier rebord circulaire tout en laissant le siège-auto pour enfant libre de tourner quand il est saisi par les crochets.

2. Dispositif selon la revendication 1, dans lequel la surface de support (20) est parallèle aux tubes de cadre (8) et de préférence juste au-dessus de leur surface supérieure.

3. Dispositif selon la revendication 1 ou la revendication 2, dans lequel les crochets mobiles (11) ont une première position dans laquelle le siège-auto pour enfant (1) peut être positionné sur la surface de support (20) ou retiré de celle-ci et une deuxième position dans laquelle les crochets peuvent maintenir le premier rebord circulaire (22) contre la surface de support, et un mécanisme (9, 26, 32) pour positionner les crochets mobiles dans la première position et dans la deuxième position.

4. Dispositif selon les revendications 1, 2 ou 3, dans lequel les crochets (11) peuvent saisir le premier rebord circulaire avec leur circonférence extérieure.

5. Dispositif selon les revendications 1 à 4, dans lequel il y a trois crochets (11) ou plus.

6. Dispositif selon la revendication 5, dans lequel les crochets mobiles (11) peuvent se déplacer dans trois directions radiales ou plus.

7. Dispositif selon l'une des revendications précédentes, dans lequel les crochets mobiles (11) peuvent coulisser le long d'un guide linéaire (33) entre la première position et la deuxième position.

8. Dispositif selon l'une des revendications précédentes, dans lequel la glissière (5) a, aux emplacements des crochets (11), une ou plusieurs parties de deuxième rebord (21) de sorte que, dans la deuxième position, les crochets saisissent à la fois le premier rebord circulaire (22) et une partie de deuxième rebord.

9. Dispositif selon l'une des revendications précédentes, dans lequel les crochets mobiles (11) ont un moyen formant ressort (52) leur permettant de se déplacer vers la première position et un moyen de retenue (26, 34, 39) leur permettant de rester dans la deuxième position.

10. Dispositif selon l'une des revendications précédentes, dans lequel un disque à cames (26) pouvant tourner autour d'un premier axe (27) et placé de préférence au centre (c) des crochets (11) peut déplacer les crochets mobiles, le disque à cames ayant des surfaces de came, chacune d'entre elles pressant contre un plan latéral du crochet mobile.

11. Dispositif selon la revendication 10, dans lequel les surfaces de came sont formées de telle manière que le moyen formant ressort (52) empêche une rotation du disque à cames (26) lorsque les crochets mobiles (11) sont dans la deuxième position.

12. Dispositif selon la revendication 10 ou la revendication 11, dans lequel le disque à cames (26) est pivoté par une manette (32) pouvant tourner autour d'un deuxième axe et munie d'un moyen (29, 30) pour coupler la rotation du disque à cames et de la manette.

13. Dispositif selon l'une des revendications précédentes, dans lequel la glissière (5) a une position de montage dans laquelle elle est placée à distance des dispositifs de fixation (2) et est munie d'un moyen de blocage (17) pour empêcher la glissière de se déplacer de la position de montage vers les dispositifs de fixation.

14. Dispositif selon la revendication 13, dans lequel le moyen de blocage comprend des broches (17) qui peuvent s'étendre depuis chaque tube de cadre (8).

15. Dispositif selon la revendication 14, dans lequel chaque broche (17) est raccordée à un premier capteur (49) déterminant si le dispositif de fixation (2) est raccordé à l'ancrage monté dans le véhicule (48).

16. Dispositif selon les revendications 13, 14 ou 15, dans lequel les tubes de cadre (8) sont pourvus d'encoches (41) et la glissière (5) est pourvue d'un encliquetage (36) pour empêcher la glissière de se déplacer dans la direction s'éloignant des dispositifs de fixation (2).

17. Dispositif selon la revendication 16, dans lequel l'encliquetage (36) est raccordé à un deuxième capteur (15) destiné à déterminer si un siège-auto pour enfant (1) est placé sur la surface de support (20) et/ou si le rebord circulaire (22) est complètement positionné sur la surface de support.

18. Dispositif selon l'une des revendications 13 à 17, dans lequel les tubes de cadre (8) ont chacun un bouton (14) pour déconnecter le dispositif de fixation (2) du support monté dans le véhicule (48), ledit bouton étant couvert et/ou désactivé par la glissière (5) lorsque la glissière n'est pas dans la position de montage.

19. Siège-auto pour enfant comprenant un dispositif (53) selon l'une des revendications précédentes, dans lequel le siège-auto pour enfant a un rebord circulaire (22) qui peut reposer sur la surface de support (20) et qui peut être saisi par les crochets (11).

20. Siège-auto pour enfant selon la revendication 19, dans lequel le rebord circulaire (22) a sur son diamètre intérieur une surface cylindrique qui peut tourner autour des crochets (11).
